# EUROPÄISCHE PATENTANMELDUNG

(11) **EP 4 306 275 A1**
(43) Veröffentlichungstag der Anmeldung: **17.01.2024**
(21) Anmeldenummer: 23000102.6
(22) Anmeldetag: 11.07.2023
(51) Int. Cl.: B26D 1/00, B26D 1/14, B26D 3/00, B26F 1/18, B26F 1/20, B65H 16/00, A01G 2/00, B65H 35/02, B29B 17/02, A01G 13/02

(54) **VERFAHREN UND VORRICHTUNG ZUM AUFBEREITEN MINDESTENS EINER FOLIE**

(30) Priorität: 11.07.2022 DE 102022002511
(71) Anmelder: Hermeler, Thomas, 48336 Sassenberg-Füchtorf (DE)
(72) Erfinder: Hermeler, Thomas, 48336 Sassenberg-Füchtorf (DE); Kreimer, Hendrik, 48336 Sassenberg (DE); Höwelhans, Ralf, 49219 Glandorf (DE)
(74) Vertreter: Witzany, Manfred

(57) **Zusammenfassung**

Ein Verfahren dient zum Aufbereiten von Folien (6) zur Abdeckung landwirtschaftlicher Kulturen. Diese Folien (6) weisen mindestens eine randseitige, mit Beschwermittel (11) gefüllte Tasche (10) auf. Diese Taschen (10) werden derart eingeschnitten, dass die Folie (6) zusammenhängend bleibt und das Beschwermittel (11) die Schnitte durchdringen kann. Anschließend wird das Beschwermittel (11) aus der Tasche (10) entnommen.

## Beschreibung

Die Erfindung betrifft ein Verfahren zum Aufbereiten mindestens einer Folie zur Abdeckung von landwirtschaftlichen Kulturen. Die mindestens eine Folie soll dabei mindestens eine randseitige, mit Beschwermittel gefüllte Tasche aufweisen. Außerdem betrifft die Erfindung eine Vorrichtung zur Durchführung des Verfahrens.

Es ist bekannt, zur Abdeckung von landwirtschaftlichen Kulturen, insbesondere von Spargeldämmen, Folien einzusetzen, die an beiden Rändern durch Umfaltung erzeugte Taschen aufweisen. Diese Taschen sind dabei mit Beschwermittel gefüllt, um die Folie unabhängig von Windeinflüssen zu machen. Diese Folien haben aber nur eine endliche Lebensdauer, da sie - bedingt durch Sonneneinstrahlung und Verschmutzung - brüchig werden und die landwirtschaftliche Kulturen nicht mehr ordnungsgemäß abdecken können. Dann müssen diese Folien grundsätzlich entsorgt werden. Üblicherweise wird dabei die Folie samt dem in den Taschen befindlichen Beschwermaterial entsorgt, was aus mehreren Gründen nachteilig ist. Durch die Entsorgung der Folie mit dem Beschwermaterial entstehen erhöhte Transport- und Deponiekosten. Außerdem geht das Beschwermaterial verloren, welches üblicherweise aus Bodenmaterial besteht, welches landwirtschaftlich nutzbar wäre. Für die nächste Foliengeneration muss dann wiederum entsprechendes Bodenmaterial entnommen werden, was den landwirtschaftlichen Boden zusehends verarmt.

Aus der gattungsgemäßen DE 10 2019 004 224 B3 ist eine Aufschneidvorrichtung für Taschenfolien bekannt. Diese weist eine Messerwelle auf, auf der axial beabstandet Kreismesser angeordnet sind. Diese Kreismesser tauchen in eine Gegentrommel ein, um damit die Folie im Bereich der Taschen längs zu durchschneiden. Auf diese Weise wird die Folie in Längsstreifen zerteilt, was eine sehr einfache Trennung des Beschwermittels von der Folie erlaubt. Allerdings besteht nach diesem Schnittvorgang die Folie im Bereich der Taschen nur noch aus schmalen Längsstreifen, die aufgrund ihrer geringen Breite leicht zerreißen können. Dies erhöht die Gefahr, dass sich die Folie immer weiter zerkleinert und auf diese Weise den Boden mit Mikroplastik kontaminiert.

Der Erfindung liegt die Aufgabe zugrunde, ein Verfahren zum Aufbereiten verbrauchter Folien zu schaffen, welches bodenschonend und gleichzeitig kostengünstig ist.

Die Aufgabe wird erfindungsgemäß mit den folgenden Merkmalen gelöst.

Der Erfindungsgegenstand betrifft ein Verfahren zum Aufbereiten mindestens einer Folie zur Abdeckung von landwirtschaftlichen Kulturen. Dabei ist insbesondere an Spargeldämme gedacht. Der Erfindungsgegenstand ist jedoch nicht hierauf begrenzt. Beispielsweise kann der Erfindungsgegenstand auch für Erdbeerkulturen oder Folientunnel eingesetzt werden. Die mindestens eine Folie weist mindestens eine randseitige Tasche auf, welche mit Beschwermittel gefüllt ist. Das Beschwermittel kann von beliebiger Art sein, wobei am häufigsten Bodenmaterial eingesetzt wird, welches vor Ort entnommen wird, um auf diese Weise Transportkosten klein zu halten. Ziel des erfindungsgemäßen Verfahrens ist es, diese mindestens eine Folie derart aufzubereiten, dass das Folienmaterial, also das Polymer, bis zu einem bestimmten Mindestgrad vom Beschwermittel getrennt wird. Hierzu werden die Taschen derart eingeschnitten, dass die Folie zusammenhängend bleibt, die Schnitte aber Löcher bilden, durch die das Beschwermittel dringen kann. Würde dagegen die Folie in mehrere Teile zerschnitten werden, so bestünde die erhebliche Gefahr, dass dabei Mikroplastik entsteht, welches dann in unerwünschter Weise auch in den Boden der landwirtschaftlichen Kulturen gelangen könnte. Deshalb ist es vorteilhafter, die mindestens eine Folie nur so weit einzuschneiden, dass sie noch zusammenhängend bleibt, auch wenn dadurch die Entnahme des Beschwermaterials aus den Taschen erheblich erschwert wird. Infolge der Schnitte in der Folie wird anschließend das Beschwermittel aus der mindestens einen Tasche entnommen. Damit wird das Beschwermittel insoweit sicher von der mindestens einen Folie getrennt, dass das Beschwermittel frei von Plastik ist und für die nächste Folienfüllung wiederverwendbar ist. Die mindestens eine Folie kann zwar grundsätzlich entsorgt werden, ohne das in der mindestens einen Tasche befindliche Beschwermittel ist es jedoch auch vorstellbar, die Folie zu reinigen und anschließend einzuschmelzen, um hieraus wieder Kunststoffgranulat als Rohstoff für neue Polymerprodukte herzustellen. Dies ist ohne die Trennung des Beschwermittels von der mindestens einen Folie nicht möglich.

Vorzugsweise erfolgt die Entnahme des Beschwermittels durch Klopfen und/oder Rütteln. Es hat sich herausgestellt, dass auf diese Weise eine sehr effektive Entnahme möglich ist, ohne dass dabei die Gefahr besteht, dass die Schnitte in der mindestens einen Folie aufreißen und sich dann die mindestens eine Folie in mehrere Stücke zerteilt, was vermieden werden sollte. Insbesondere sollte ein Kneten der mindestens einen Folie vermieden werden, da sich hierdurch die mindestens eine Folie in sehr kleine Stücke zerteilt, was dann zu Mikroplastik führen könnte.

Je nach Beschwermaterial kann es vorkommen, dass dieses mit der Zeit klumpt, was dessen Entfernung aus der mindestens einen Tasche erschwert. Deshalb werden mehrere Schnitte erstellt, die quer zur Längserstreckung der mindestens einen Folie beabstandet und zueinander versetzt sind. Auf diese Weise ergeben sich entsprechend mehr Öffnungen, die sich zusätzlich stärker aufweiten lassen als eine lineare Perforation. Durch die versetzte Anordnung der Schnitte wird außerdem die Gefahr reduziert, dass die Folie zwischen den Schnitten einreißt.

Da das erfindungsgemäße Verfahren relativ einfach durchzuführen ist, ist nur ein überschaubarer maschineller Aufwand erforderlich. Damit kann dieses Verfahren auch im Bereich der landwirtschaftlichen Kultur durchgeführt werden, was die Transportkosten entsprechend senkt.

Eine Vorrichtung zur Durchführung des erfindungsgemäßen Verfahrens weist mindestens eine drehbare Messertrommel auf, die im Bereich der mindestens einen Tasche vorgesehen ist. Diese mindestens eine Messertrommel ist mit Messern bestückt, die sich nur über einen Teilbereich des Umfangs der mindestens einen Messertrommel erstrecken. Dadurch ist gewährleistet, dass in ihrer Länge begrenzte Schnitte in der mindestens einen Folie erstellt werden, so dass die mindestens eine Folie zusammenhängend bleibt. Der mindestens einen Messertrommel liegt mindestens eine Gegentrommel gegenüber, in die die Messer eintauchen können. Diese mindestens eine Gegentrommel sorgt für einen entsprechenden Anpressdruck der Messer, so dass die mindestens eine Folie dem Druck der Messer nicht ausweichen kann. Damit ist eine zuverlässige Erstellung der Schnitte im Bereich der mindestens einen Tasche gewährleistet.

Zur Anpassung an unterschiedliche Erfordernisse, insbesondere an unterschiedliche Beschwermittel ist es vorteilhaft, wenn die mindestens eine Messertrommel unterschiedlich mit den Messern bestückbar ist. Damit können bei leicht fließenden Beschwermitteln nur wenige Messer eingesetzt werden, während bei stark klumpenden Beschwermitteln entsprechend mehr Messer benötigt werden. Auf diese Weise wird eine zuverlässige Trennung des Beschwermittels von der mindestens einen Folie erzielt, ohne die mindestens eine Folie unnötig stark zu beanspruchen. Auf diese Weise wird der Entstehung von Mikroplastik vorgebeugt.

Für die Messer hat sich eine dreieckige Form mit abgerundeter Spitze bewährt. Auf diese Weise ergibt sich ein sehr definierter Schnitt in der mindestens einen Folie, der nur eine geringe Tendenz zum Weiterreißen aufweist, so dass die mindestens eine Folie zusammenhängend bleibt.

Um die Anpassbarkeit der mindestens einen Messertrommel weiter zu verbessern, ist es vorteilhaft, wenn sie aus Scheiben zusammengesetzt ist, wobei die Anzahl der Scheiben variabel ist. Damit lassen sich nicht nur in Umfangsrichtung mehr oder weniger Messer einbauen, sondern auch die Anzahl der Messerspuren variieren.

Zur Anpassung an unterschiedliche Beschwermittel ist es außerdem vorteilhaft, wenn die mindestens eine Messertrommel und/oder die mindestens eine Gegentrommel verstellbar ist. Auf diese Weise wird eine Eindringtiefe der Messer in die mindestens eine Gegentrommel eingestellt, um optimale Betriebsparameter zum Aufbereiten der mindestens einen Folie zu erzielen.

Außerdem ist es vorteilhaft, wenn der mindestens einen Messertrommel mindestens eine Klopf- und/oder Rüttelvorrichtung nachgeordnet ist. Auf diese Weise kann in einem Arbeitsgang die mindestens eine Folie aufgeschnitten und unmittelbar danach vom Beschwermittel getrennt werden.

Für die Klopf- und/oder Rüttelvorrichtung haben sich exzentrisch gehaltene Stäbe bewährt, die oszillatorisch angetrieben sind. Dabei können die Stäbe über die Breite der mindestens einen Folie durchgängig ausgebildet sein. Alternativ ist auch daran gedacht, diese so kurz auszubilden, dass sie im Wesentlichen nur über den Bereich der mindestens einen Tasche verlaufen.

Um sicherzustellen, dass die mindestens eine Folie der mindestens einen Messertrommel ordnungsgemäß zugeführt wird, ist es vorteilhaft, wenn der mindestens einen Messertrommel mindestens eine Folienführungsvorrichtung vorgeordnet ist. Diese sorgt dafür, dass die mindestens eine Tasche der mindestens einen Messertrommel so zugeführt wird, dass die Messer auf die mindestens eine Tasche ausgerichtet sind.

Um eine kontinuierliche Zuführung der mindestens einen Folie zur mindestens einen Messertrommel zu gewährleisten, ist es vorteilhaft, wenn die Vorrichtung mindestens einen Folienabroller aufweist. Auf diesem ist die mindestens eine Folie aufgewickelt und kann mit der optimalen Geschwindigkeit abgewickelt und der mindestens einen Messertrommel zugeführt werden.

Das erfindungsgemäße Verfahren sowie die erfindungsgemäße Vorrichtung zur Durchführung dieses Verfahrens werden anhand der Zeichnung näher erläutert, ohne den Schutzumfang zu beschränken.

Es zeigt:

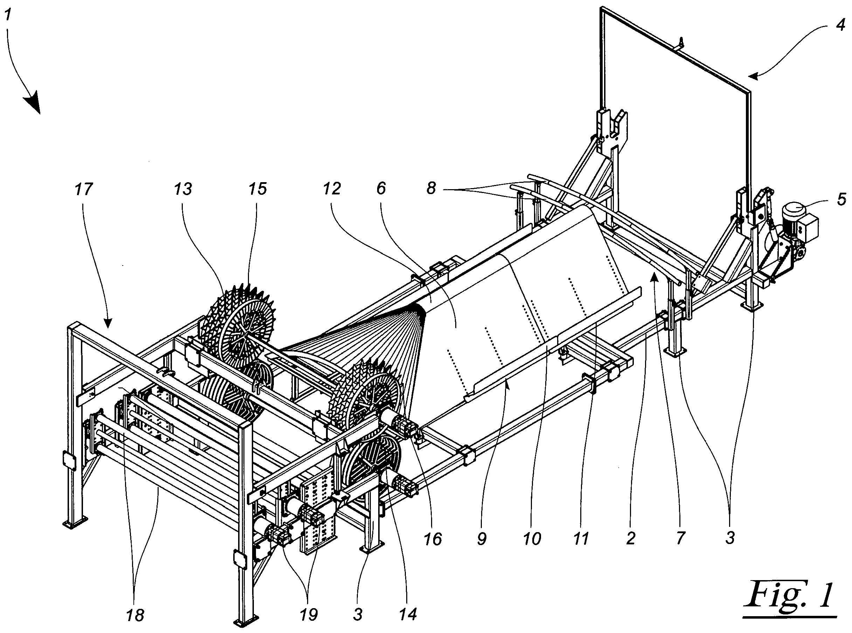

- Figur 1: eine räumliche Darstellung einer Vorrichtung zum Aufbereiten von Folien,
- Figur 2: eine räumliche Darstellung einer Messertrommel und
- Figur 3: eine räumliche Darstellung einer Gegentrommel.

Die Vorrichtung 1 weist einen Rahmen 2 auf, der an Stützfüßen 3 abstützbar ist. Dieser Rahmen 2 bildet die mechanische Grundlage der Vorrichtung 1 und stützt alle weiteren Komponenten sicher ab.

Auf dem Rahmen 2 ist ein Folienabroller 4 gehalten, auf dem sich eine nicht dargestellte Haspel befindet. Dieser Folienabroller 4 wird von einem Antrieb 5 zur Drehung angetrieben, um Zugkräfte klein zu halten. Auf der Haspel ist eine Folie 6 aufgewickelt. Zur besseren Erkennbarkeit der einzelnen Teile der Vorrichtung 1 ist die Folie 6 im Bereich der Haspel nicht dargestellt.

Die Folie 6 wird über eine Ausbreitvorrichtung 7 gezogen, die im Wesentlichen von zwei gebogenen Stangen 8 gebildet ist. Diese Stangen 8 sorgen für eine Verkrümmung der Folie 6 unter Zuhilfenahme der Schwerkraft.

Die Folie 6 besteht aus einem Polymer und ist an ihren Längskanten 9 zur Bildung von Taschen 10 umgeschlagen. Diese Taschen 10 sind mit einem Beschwermittel 11 gefüllt. Zweck der Vorrichtung 1 ist es, die Folie 6 im Bereich der Taschen 10 so weit durch Schnitte zu zerstören, dass das Beschwermittel 11 entnommen werden kann, so dass die Folie 6 vom Beschwermittel 11 getrennt ist.

Der Ausbreitvorrichtung 7 ist eine Folienführungsvorrichtung 12 nachgeordnet, die im Wesentlichen aus einem in Folienlängsrichtung angeordneten Bügel besteht, welcher die Folie 6 im Bereich ihrer Mitte anhebt. Dieser Bügel kann verstellbar sein, um eine saubere Zuführung der Taschen 10 zu nachfolgenden Messertrommeln 13 zu gewährleisten. In einfachen Fällen kann aber auf die Verstellung dieses Bügels auch verzichtet werden.

Um die Taschen 10 der Folie 6 aufzuschneiden, werden diese an den Messertrommeln 13 vorbeigeführt. Diesen Messertrommeln 13 sind Gegentrommeln 14 gegenüberliegend, in die Messer 15 der Messertrommel 13 eintauchen können. Sowohl die Messertrommeln 13 als auch die Gegentrommeln 14 werden von Antrieben 16, insbesondere in Form von Elektromotoren, zur Drehung angetrieben, um auf diese Weise die Folie 6 durch die Vorrichtung 1 durchzutransportieren. Die Folie 6 wird dabei so zwischen der Messertrommel 13 und der Gegentrommel 14 hindurchgeführt, dass die Taschen 10 von den Messern 15 der Messertrommel 13 durchdrungen werden.

Den Messertrommeln 13 ist eine Klopf- und Rüttelvorrichtung 17 nachgeordnet, die oszillatorisch und exzentrisch angesteuert werden. Auf diese Weise ergibt sich eine Klopf- bzw. Rüttelwirkung, um das Beschwermittel 11 von der Folie 6 zu trennen. Zu diesem Zweck sind die Stäbe 18 mit weiteren Antrieben 19 verbunden. Auch diese werden vorzugsweise als Elektromotor ausgebildet.

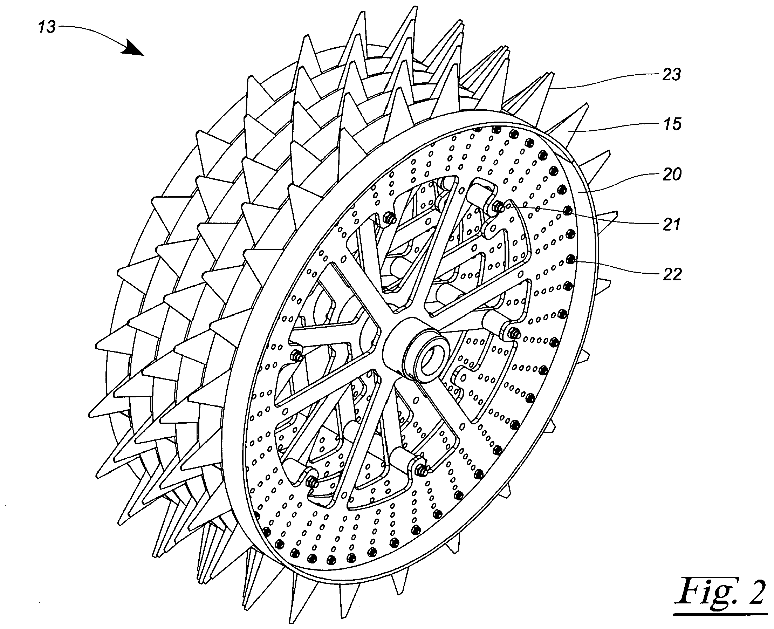

Die Figur 2 zeigt die Messertrommel 13. Diese ist aus mehreren Scheiben 20 aufgebaut, die mittels Schrauben 21 miteinander drehfest verbunden sind. Auf diese Weise bilden die Scheiben 20 eine feste Einheit. Je nach Bedarfsfall können mehr oder weniger der Scheiben 20 eingesetzt werden.

An den Scheiben 20 sind mittels weiterer Schrauben 22 die Messer 15 gehalten, die ebenfalls dichter oder weniger dicht bestückt werden können. Von Scheibe 20 zu Scheibe 20 sind die Messer 15 versetzt angeordnet, um eine größere Öffnung der erzeugten Schnitte in der Folie 6 zu erzielen und gleichzeitig eine Zerteilung der Folie 6 in verschiedene Stücke zu vermeiden.

Die Messer 15 haben eine dreieckige Form mit abgerundeter Spitze. Dabei bilden sowohl die abgerundete Spitze als auch die Seitenkanten des Dreiecks Schneiden 23, die die Folie 6 durchdringen können.

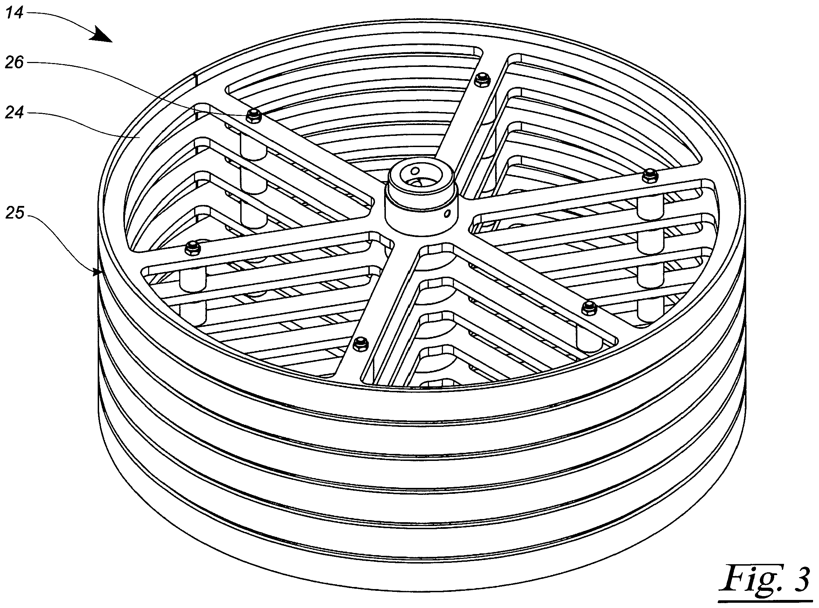

Die Figur 3 zeigt die Gegentrommel 14, die ebenfalls aus einzelnen Scheiben 24 aufgebaut ist. Zwischen den Scheiben 24 ist jeweils eine Lücke 25 vorgesehen, in die die Messer 15 eintauchen können. Auf diese Weise ergibt sich eine hohe Scherwirkung, die zum Durchtrennen der Folie 6 führt. Die Scheiben 24 sind in keiner Weise wie bei der Messertrommel 13 mittels Schrauben 26 verbunden, so dass die Scheiben 24 eine feste Einheit bilden.

### Bezugszeichenliste

- 1: Vorrichtung
- 2: Rahmen
- 3: Stützfuß
- 4: Folienabroller
- 5: Antrieb
- 6: Folie
- 7: Ausbreitvorrichtung
- 8: Stange
- 9: Längskante
- 10: Tasche
- 11: Beschwermittel
- 12: Folienführungsvorrichtung
- 13: Messertrommel
- 14: Gegentrommel
- 15: Messer
- 16: Antrieb
- 17: Klopf- und Rüttelvorrichtung
- 18: Stab
- 19: Antrieb
- 20: Scheibe
- 21: Schraube
- 22: Schraube
- 23: Schneide
- 24: Scheibe
- 25: Lücke
- 26: Schraube

## Patentansprüche

1. Verfahren zum Aufbereiten mindestens einer Folie (6) zur Abdeckung von landwirtschaftlichen Kulturen, insbesondere Spargeldämmen, wobei die mindestens eine Folie (6) mindestens eine randseitige, mit Beschwermittel (11) gefüllte Tasche (10) aufweist, **dadurch gekennzeichnet, dass** die mindestens eine Tasche (10) derart eingeschnitten wird, dass die mindestens eine Folie (6) zusammenhängend bleibt und das Beschwermittel (11) die Schnitte durchdringen kann, wonach das Beschwermittel (11) aus der mindestens einen Tasche entnommen wird.

2. Verfahren nach Anspruch 1, **dadurch gekennzeichnet, dass** die Entnahme des Beschwermittels (11) durch Klopfen und/oder Rütteln erfolgt.

3. Verfahren nach Anspruch 1 oder 2, **dadurch gekennzeichnet, dass** mehrere Schnitte in Längsrichtung der mindestens einen Folie (6) erstellt werden, die zueinander versetzt und quer zur Längsrichtung beabstandet sind.

4. Verfahren nach mindestens einem der Ansprüche 1 bis 3, **dadurch gekennzeichnet, dass** das Verfahren im Bereich der landwirtschaftlichen Kultur durchgeführt wird.

5. Vorrichtung zur Durchführung des Verfahrens nach mindestens einem der Ansprüche 1 bis 4, wobei die Vorrichtung mindestens eine drehbare Messertrommel (13) aufweist, die im Bereich der mindestens einen Tasche (10) vorgesehen ist und mit Messern (15) bestückt ist, und der mindestens einen Messertrommel (13) mindestens eine drehbare Gegentrommel (14) gegenüberliegt, in die die Messer (15) eintauchen können, **dadurch gekennzeichnet, dass** sich die Messer (15) nur über einen Teilbereich des Umfangs der mindestens einen Messertrommel (13) erstrecken.

6. Vorrichtung nach Anspruch 5, **dadurch gekennzeichnet, dass** die mindestens eine Messertrommel (13) unterschiedlich mit den Messern (15) bestückbar ist.

7. Vorrichtung nach Anspruch 5 oder 6, **dadurch gekennzeichnet, dass** mindestens eines der Messer (15) eine dreieckige Form mit abgerundeter Spitze aufweist.

8. Vorrichtung nach mindestens einem der Ansprüche 5 bis 7, **dadurch gekennzeichnet, dass** die mindestens eine Messertrommel (13) aus Scheiben (20) zusammengesetzt ist, wobei die Anzahl der Scheiben (20) variabel ist.

9. Vorrichtung nach mindestens einem der Ansprüche 5 bis 8, **dadurch gekennzeichnet, dass** die mindestens eine Messertrommel (13) und/oder die mindestens eine Gegentrommel (14) verstellbar ist, um eine Eintautiefe der Messer (15) in die mindestens eine Gegentrommel (14) einstellen zu können.

10. Vorrichtung nach mindestens einem der Ansprüche 5 bis 9 **dadurch gekennzeichnet, dass** der mindestens einen Messertrommel (13) mindestens eine Klopf- und/oder Rüttelvorrichtung (17) nachgeordnet ist.

11. Vorrichtung nach Anspruch 10, **dadurch gekennzeichnet, dass** die mindestens eine Klopf- und/oder Rüttelvorrichtung (17) exzentrisch gelagerte Stäbe (18) aufweist, die oszillatorisch angetrieben sind.

12. Vorrichtung nach mindestens einem der Ansprüche 5 bis 11, **dadurch gekennzeichnet, dass** der mindestens einen Messertrommel (13) mindestens eine Folienführungsvorrichtung (12) vorgeordnet ist, welche die mindestens eine Folie (6) derart zur mindestens einen Messertrommel (13) führt, dass die mindestens eine Tasche (10) der mindestens einen Messertrommel (13) zugeführt wird.

13. Vorrichtung nach mindestens einem der Ansprüche 5 bis 12, **dadurch gekennzeichnet, dass** die Vorrichtung (1) mindestens einen Folienabroller (4) aufweist, auf der die mindestens eine Folie (6) aufgewickelt is.
